(19) Europäisches Patentamt
European Patent Office
Office européen des brevets

(11) EP 3 340 254 A1

(12) EUROPEAN PATENT APPLICATION
published in accordance with Art. 153(4) EPC

(43) Date of publication:
**27.06.2018 Bulletin 2018/26**

(21) Application number: **16839183.7**

(22) Date of filing: **18.08.2016**

(51) Int Cl.:
***H01B 1/24** (2006.01)*
***C08L 79/00** (2006.01)*
***C08L 101/00** (2006.01)*
***H02N 11/00** (2006.01)*

(86) International application number:
**PCT/JP2016/074153**

(87) International publication number:
**WO 2017/033836 (02.03.2017 Gazette 2017/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.08.2015 JP 2015163328**

(71) Applicant: **National Institute of Advanced Industrial Science and Technology**
**Tokyo 100-8921 (JP)**

(72) Inventors:
- **SUGINO, Takushi**
**Ikeda-shi**
**Osaka 563-8577 (JP)**
- **ASAKA, Kinji**
**Ikeda-shi**
**Osaka 563-8577 (JP)**

(74) Representative: **Müller-Boré & Partner Patentanwälte PartG mbB**
**Friedenheimer Brücke 21**
**80639 München (DE)**

# (54) NANOCARBON POLYMER ACTUATOR

(57) An object of the present invention is to provide an actuator that has improved performance. As a means for achieving this object, provided is a conductive thin film comprising a polymer gel containing a polyaniline (PANI), carbon nanohorns (CNH), carbon nanotubes (CNT), an ionic liquid, and a polymer, wherein the mass of the polyaniline is 10 to 50%, the mass of the carbon nanohorns is 10 to 50%, and the mass of the carbon nanotubes is 1 to 50% when the total mass of the polyaniline, the carbon nanohorns, and the carbon nanotubes is taken as 100%.

Fig. 6

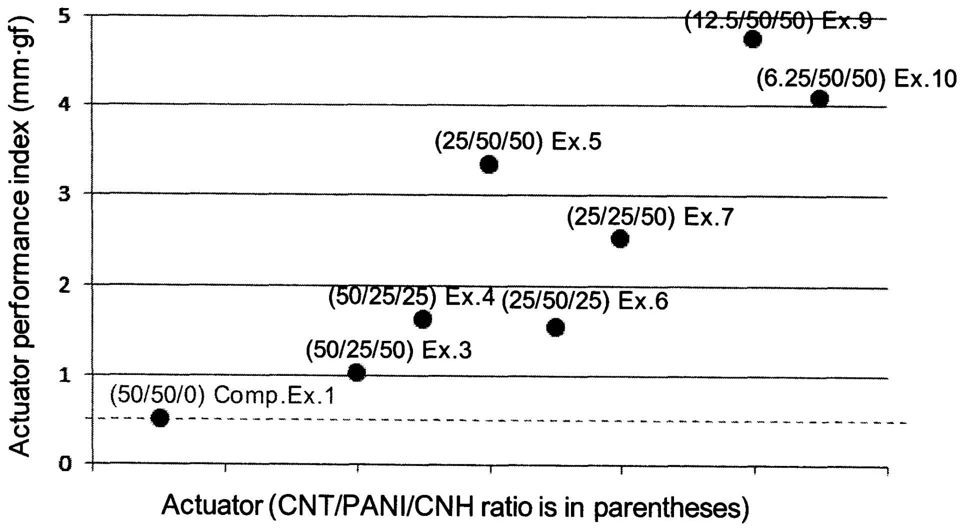




Printed by Jouve, 75001 PARIS (FR)

**Description**

Technical Field

Cross-Reference to Related Applications

The present application claims priority to the specification of Japan Patent Application No. 2015-163328 filed on August 21, 2015 (the entire disclosure of which is incorporated herein by reference).

The present invention relates to a conductive thin film, a laminate, and an actuator element. The actuator element herein refers to an actuator element that is driven by an electrochemical process, such as electrochemical reactions or the charging and discharging of electrical double layers.

Background Art

An actuator that comprises carbon nanotubes and that is bent and deformed by application of voltage has been proposed. This actuator is configured such that when voltage is applied, charge is injected into carbon-material-containing electrode layers and ions in an electrolyte are concurrently injected into electrodes, whereby electrode films expand or contract, and so an actuator element is bent and deformed. The present inventors added conductive or non-conductive nanoparticles into electrode films and thereby succeeded in significantly improving the actuator performance. For example, an actuator element comprising polyaniline (Patent Literature (PTL) 1) and an actuator element comprising carbon nanotubes and carbon nanohorns (Patent Literature (PTL) 2 to 4) are known.

Citation List

Patent Literature

PTL 1: WO2009/157491
PTL 2: WO2010/029992
PTL 3: JP2011-239604A
PTL 4: JP2013-021765A

Summary of Invention

Technical Problem

An object of the present invention is to provide an actuator with improved performance in terms of the percentage of expansion or contraction, generated force, and voltage durability. Solution to Problem

In the prior art, the present inventors succeeded in improving actuator performance by providing an actuator element comprising polyaniline and an actuator comprising carbon nanotubes and carbon nanohorns. The inventors found that the performance of actuator elements can be further improved by mixing polyaniline, carbon nanotubes, and carbon nanohorns at a specific ratio.

The present invention provides a conductive thin film, a laminate, and an actuator element.

Item 1. A conductive thin film comprising a polymer gel containing a polyaniline (PANI), carbon nanohorns (CNH), carbon nanotubes (CNT), an ionic liquid, and a polymer, wherein the mass of the polyaniline is 10 to 50%, the mass of the carbon nanohorns is 10 to 50%, and the mass of the carbon nanotubes is 1 to 50% when the total mass of the polyaniline, the carbon nanohorns, and the carbon nanotubes is taken as 100%.

Item 2. The conductive thin film according to Item 1, wherein based on the mass ratio,
PANI/CNH = 1/6 to 3/1,
CNT/PANI = 3/50 to 3/1, and
CNT/CNH = 3/50 to 3/1.

Item 3. The conductive thin film according to Item 2, wherein based on the mass ratio,
PANI/CNH = 1/2 to 2/1,
CNT/PANI = 3/25 to 2/1, and
CNT/CNH = 3/25 to 2/1.

Item 4. The conductive thin film according to Item 1, wherein the mass of the carbon nanotubes is 3 to 40% when

the total mass of the polyaniline, the carbon nanohorns, and the carbon nanotubes is taken as 100%.

Item 5. A laminate comprising at least one conductive thin film according to any one of Items 1 to 4 and at least one electrolyte membrane comprising an ionic liquid and a polymer.

Item 6. An actuator element comprising the laminate according to Item 5.

Item 7. The actuator element according to Item 6, comprising at least two conductive thin film layers each comprising the conductive thin film according to any one of Items 1 to 4 as an electrode and provided on a surface or surfaces of an electrolyte membrane in such a manner that the conductive thin film layers are insulated from one another, the electrolyte membrane comprising an ionic liquid and a polymer, and the actuator element being deformable by applying a potential difference between the conductive thin film layers.

Advantageous Effects of Invention

According to the present invention, a polyaniline (PANI) and carbon nanohorns (CNH) are simultaneously added to a conductive thin film comprising carbon nanotubes and an ionic liquid so as to achieve a specific CNT/PANI/CNH ratio and the resulting conductive thin film is used to produce an actuator. The obtained actuator successfully achieves a high percentage of expansion or contraction so that the maximum expansion or contraction percentage is at least twice as high as that of known actuators (for example, in comparison with an actuator comprising SG/PANI (50/50)), and achieves a generated force that is at least four times as large as that of known actuators. "SG" means supergrowth carbon nanotubes.

Further, the present inventors found that the DC voltage durability of the actuator produced by using the conductive thin film can be adjusted by the CNT/PANI/CNH ratio.

The actuator elements obtained by the present invention exhibit excellent comprehensive evaluation results in terms of the percentage of expansion or contraction and generated force (the actuator performance index) and DC voltage durability.

Brief Description of Drawings

Fig. 1 (A) is a diagram showing the method of evaluating the displacement of actuator elements by using a laser displacement meter in the Examples of the present specification. Fig. 1 (B) is a schematic diagram of load cell measurement of the force generated by the actuator elements in the Examples of the present specification.

Fig. 2 (A) is a schematic diagram showing the structure of the actuator element according to one embodiment of the present invention (three-layer structure). Fig. 2 (B) is a schematic diagram showing the structure of the actuator element according to another embodiment of the present invention (five-layer structure).

Fig. 3 is a diagram showing an operating principle of the actuator element of the invention.

Fig. 4 is a schematic diagram showing another example of the actuator element of the invention.

Fig. 5A is a diagram showing the actuator property improvement (frequency dependence of the percentage of expansion or contraction) achieved by simultaneous addition of PANI and CNH; all data.

Fig. 5B is a diagram showing frequency dependence of the percentage of expansion or contraction when the proportion of CNT is set to be 50 (50/X/X).

Fig. 5C is a diagram showing frequency dependence of the percentage of expansion or contraction when the proportion of CNT is set to be 25 (25/X/X).

Fig. 5D is a diagram showing frequency dependence of the percentage of expansion or contraction when the proportion of CNT is a variable (X/50/50).

Fig. 6 shows actuator property improvement achieved by using a combination of PANI and CNH. Using ternary actuators, the value obtained by multiplying generated force by the amount of deformation at 0.05 Hz upon application of a $\pm 2.5$ V rectangular wave voltage was introduced as an actuator performance index, and each actuator element was compared to analyze the effect of the combination of PANI and CNH. The horizontal axis indicates actuators (with the CNT/PANI/CNH ratio shown in parentheses). The actuator of Comparative Example 1 is shown on the far left, and the actuators of the Examples are aligned on the right side of the actuator of Comparative Example 1 in such a manner that those containing CNT in a higher proportion and those containing the total of CNT + PANI + CNH in a higher proportion are positioned closer to the left.

Fig. 7 shows the actuator property improvement (DC voltage durability) achieved by using a combination of PANI and CNH.

Description of Embodiments

The carbon nanotubes used in the present invention are a carbon-based material comprising a cylindrically rolled graphene sheet. Various carbon nanotubes are known. For example, carbon nanotubes are roughly classified into single-walled carbon nanotubes (SWNTs) and multi-walled carbon nanotubes (MWNTs), based on the number of peripheral walls. Further, carbon nanotubes are classified into chiral (helical) nanotubes, zigzag nanotubes, and armchair nanotubes, based on the structural difference of graphene sheets. In the present invention, any type of carbon nanotubes can be used as long as they are carbon nanotubes. Examples of usable carbon nanotubes include HiPco (produced by Unidym), which uses carbon monoxide as a raw material and can be produced on a relatively large scale. Particularly preferable are carbon nanotubes available from the National Institute of Advanced Industrial Science and Technology and produced by the super-growth method (SG-CNT).

In this specification and drawings, the carbon nanotubes synthesized by the super-growth method may be simply referred to as "SG, "CNT," or SG-CNT."

The aspect ratio of the carbon nanotubes used in the present invention is preferably $10^3$ or more. The length of carbon nanotubes is not particularly limited. Usual carbon nanotubes of about 1 $\mu$m or less in length may be used, or carbon nanotubes of longer than 1 $\mu$m, for example, longer carbon nanotubes of about 10 to 30 $\mu$m may also be used. When carbon nanotubes are synthesized by the super-growth method, carbon nanotubes of 50 $\mu$m or longer, or 200 $\mu$m or longer, particularly 500 $\mu$m or longer, can be obtained. Therefore, such long carbon nanotubes can also be used. The upper limit of the length of carbon nanotubes is not particularly limited, and may be, for example, about 10 mm.

The polyaniline used in the present invention may have various substituents. Examples of such substituents include linear or branched $C_1$-$C_{12}$ alkyl groups, hydroxyl, linear or branched $C_1$-$C_{12}$ alkoxy groups, amino, carboxyl groups, sulfonic acid groups, halogen groups, nitro, cyano, linear or branched $C_1$-$C_{12}$ alkylsulfonic acid groups, di(linear or branched $C_1$-$C_4$ alkyl)amino groups, and the like.

The carbon nanohorns used in the present invention refer to carbon nanoparticles each of which has a shape obtained by rolling a graphite sheet so as to form a circular cone and has a closed end, like the tip of a circular cone.

The polyaniline and carbon nanohorns may be commercially available products.

The ionic liquid used in the present invention may also be referred to as "room-temperature molten salt" or simply "molten salt." It is in a molten state within a wide range of temperatures, including ordinary temperature (room temperature). The ionic liquid is a salt that is in a molten state, for example, at 0°C, preferably at -20°C, and more preferably at -40°C. The ionic liquid used in the present invention preferably has high ion conductivity.

Although various known ionic liquids are usable in the present invention, ionic liquids that are in a liquid state and stable at or around ordinary temperature (room temperature) are preferred. Examples of preferable ionic liquids that can be used in the present invention are those containing cations (preferably imidazolium ions or quaternary ammonium ions) represented by formulae (I) to (IV) below and anions ($X^-$).

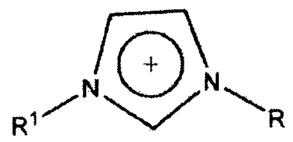

(I)

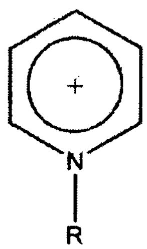

(II)

$[NR_xH_{4-x}]^+$ (III)

$[PR_xH_{4-x}]^+$ (IV)

In formulae (I) to (IV) above, R represents a linear or branched $C_1$-$C_{12}$ alkyl group or a linear or branched alkyl group that contains one or more ether linkages and in which the total number of carbon and oxygen atoms is 3 to 12. In formula (I), $R^1$ represents a linear or branched $C_1$-$C_4$ alkyl group or a hydrogen atom. In formula (I), R and $R^1$ are preferably not the same. In formulae (III) and (IV), each x is an integer of 1 to 4. In formulae (III) and (IV), two Rs may

join to form a 3- to 8-membered, preferably 5- or 6-membered aliphatic saturated ring.

Examples of linear or branched $C_1$-$C_{12}$ alkyl groups include methyl, ethyl, n-propyl, isopropyl, n-butyl, isobutyl, sec-butyl, t-butyl, pentyl, hexyl, heptyl, octyl, nonyl, decyl, undecyl, dodecyl, and the like. The number of carbon atoms is preferably 1 to 8 and more preferably 1 to 6.

Examples of linear or branched $C_1$-$C_4$ alkyl groups include methyl, ethyl, n-propyl, isopropyl, n-butyl, isobutyl, sec-butyl, and t-butyl.

Examples of linear or branched alkyl groups that contain one or more ether linkages and in which the total number of carbon and oxygen atoms is 3 to 12 include $CH_2OCH_3$, $CH_2CH_2OCH_3$, $CH_2OCH_2CH_3$, $CH_2CH_2OCH_2CH_3$, and $(CH_2)_p(OCH_2CH_2)_qOR^2$ (wherein p is an integer of 1 to 4, q is an integer of 1 to 4, and $R^2$ represents $CH_3$ or $C_2H_5$).

Examples of anions ($X^-$) include tetrafluoroboric acid ion ($BF_9^-$), $BF_3CF_3^-$, $BF_3C_2F_5^-$, $BF_3C_3F_7^-$, $BF_3C_4F_9^-$, hexafluorophosphoric acid ion ($PF_6^-$), bis(trifluoromethanesulfonyl)imide ion ($(CF_3SO_2)_2N^-$), bis (fluoromethanesulfonyl) imide ion ($(FSO_2)_2N^-$), bis (pentafluoroethanesulfonyl) imide ion ($(CF_3CF_2SO_2)_2N^-$), (fluoromethanesulfonyl) (trifluoromethanesulfonyl)imide ion ($(FSO_2)(CF_3SO_2)N^-$, perchloric acid ion ($ClO_4^-$), tris (trifluoromethanesulfonyl) carbon acid ion ($(CF_3SO_2)_3C^-$), trifluoromethanesulfonic acid ion ($CF_3SO_3^-$), dicyanamide ion ($(CN)_2N^-$), trifluoroacetic acid ion ($CF_3COO^-$), organic carboxylic acid ions, and halogen ions.

Among these, specific examples of ionic liquids are those wherein the cation is 1-ethyl-3-methylimidazolium ion, 1-butyl-3-methylimidazolium ion, $[N(CH_3)(CH_3)(C_2H_5)(C_2H_4OC_2H_4OCH_3)]^+$, or $[N(CH_3)(C_2H_5)(C_2H_5)(C_2H_4OCH_3)]^+$, and the anion is a halogen ion, tetrafluoroboric acid ion, bis(trifluoromethanesulfonyl)imidic acid ion ($(CF_3SO_2)_2N^-$), or trifluoromethanesulfonic acid ion ($CF_3SO_3^-$). It is also possible to further lower the melting point by using two or more cations and/or anions.

However, the ionic liquid is not limited to these combinations. Any ionic liquid having an ionic conductivity of 0.1 $Sm^{-1}$ or higher can be used.

The electrolyte membrane (ion conduction layer) of the present invention can be obtained by preparing a solution comprising a polymer and a solvent optionally with an ionic liquid and forming a film from the obtained solution by casting, then evaporating the solvent, and drying. The electrolyte layer can be formed, for example, be coating, printing, extrusion, casting, or injection. The solvent may be a mixture of hydrophobic and hydrophilic solvents.

Examples of hydrophilic solvents include carbonates such as ethylene carbonate, propylene carbonate, dimethyl carbonate, diethyl carbonate, methylethyl carbonate, propylene carbonate, and butylene carbonate; ethers such as tetrahydrofuran; acetone; lower alcohols having 1 to 3 carbon atoms, such as methanol and ethanol; acetonitrile; amides such as N,N-dimethylacetamide, and N-methyl-2-pyrrolidone; and the like. Examples of hydrophobic solvents include ketones having 5 to 10 carbon atoms, such as 4-methylpentan-2-one; halogenated hydrocarbons such as chloroform and methylene chloride; aromatic hydrocarbons such as toluene, benzene, and xylene; aliphatic or alicyclic hydrocarbons such as hexane and cyclohexane; and the like.

Examples of the polymer used as a conductive thin film or an electrolyte membrane in the present invention include copolymers of fluorinated olefin having one or more hydrogen atoms and perfluorinated olefin, such as polyvinylidene fluoride-hexafluoropropylene copolymer [PVDF(HFP)]; homopolymers of fluorinated olefin having one or more hydrogen atoms, such as polyvinylidene fluoride (PVDF); perfluorosulfonic acid (Nafion); poly(meth)acrylates, such as poly-2-hydroxyethyl methacrylate (poly-HEMA) and polymethyl methacrylate (PMMA); polyethylene oxide (PEO); polyacrylonitrile (PAN); and the like. This polymer does not include conductive polymers, such as polyanilines.

The conductive thin film used in the electrode layer of an actuator element comprises a polyaniline, carbon nanohorns, carbon nanotubes, a polymer, and an ionic liquid. The proportions of the carbon nanotubes + polyaniline + carbon nanohorns, the polymer, and the ionic liquid, in the conductive thin film layer are such that when the total amount of these components is taken as 100%, the proportion of the carbon nanotubes + polyaniline + carbon nanohorns is 1 to 98 mass%, preferably 23 to 66 mass%, more preferably 23 to 50 mass%; and the proportion of the polymer is 1 to 98 mass%, preferably 17 to 50 mass%, and more preferably 17 to 40 mass%; the proportion of the ionic liquid is 1 to 98 mass%, preferably 17 to 80 mass%, and more preferably 17 to 60 mass%.

The ratio of the carbon nanotubes to the total amount of the carbon nanotubes, polyaniline, and carbon nanohorns is 1 to 50 mass%, preferably 2 to 50 mass%, and more preferably 4 to 40 mass%, even more preferably 3 to 30 mass% (the lower limit may be 2, 3, 4, 5, or 6 mass%). The ratio of the polyaniline is 10 to 50 mass%, preferably 15 to 50 mass%, and more preferably 20 to 50 mass%. The ratio of carbon nanohorns is 10 to 50 mass%, preferably 15 to 50 mass%, and more preferably 20 to 50 mass%.

The ratio of two components of CNT, PANI, and CNH is such that the PANI/CNH ratio is preferably in the range of 1/6 to 3/1, more preferably 1/4 to 3/1, and even more preferably 1/2 to 2/1; the CNT/PANI ratio is preferably in the range of 3/50 to 3/1, more preferably 1/10 to 3/1, and even more preferably 3/25 to 2/1; the CNT/CNH ratio is preferably in the range of 3/50 to 3/1, more preferably 1/10 to 3/1, and even more preferably 3/25 to 2/1. The conductive thin film can be prepared by mixing carbon nanotubes, polyanilines, carbon nanohorns and base polymers such as polyvinylidene fluorides at a desired ratio.

Preferably, the carbon nanotubes, polyaniline, carbon nanohorns, polymer, and ionic liquid are mixed, optionally

with a solvent, at a desired ratio by stirring or the like and sonicated. The sonication time is preferably about 30 minutes to about 24 hours, and more preferably about 1 hour to about 7 hours.

The conductive thin layer can be formed by coating, printing, extrusion, casting, or injection of a mixture containing carbon nanotubes, polyaniline, carbon nanohorns, a polymer, and an ionic liquid with a solvent.

The actuator element produced by the method of the present invention has, for example, a three-layer structure in which electrolyte membrane (ion conductive layer) 1 is sandwiched on both of its sides by conductive thin film layers (electrode layers) 2,2, each conductive thin film layer comprising nanocarbon tubes, an ionic liquid, and a polymer (Fig. 2A). To increase the surface conductivity of the electrodes, the actuator element of the present invention may also have a five-layer structure in which conductive layers 3,3 are further formed on the respective outside surfaces of the electrode layers 2,2 (Fig. 2B).

An actuator element having electrically conductive thin film layers on the surface(s) of an ion conductive layer can be obtained by bonding the electrically conductive thin film layers to the surface(s) of the electrolyte membrane layer by thermal compression.

The thickness of the electrolyte membrane is preferably 5 to 200 μm, and more preferably 10 to 100 μm. The thickness of the conductive thins film layer is preferably 10 μm to 500 μm, and more preferably 50 μm to 300 μm. The film of each layer can also by formed by spin coating, printing, spraying, etc. It is also possible to use extrusion, injection method, or like methods.

The electrically conductive thin film may be a single thin film or a lamination obtained by thermocompression bonding of multiple thin films.

When a direct-current voltage of 0.5 to 4 V is applied across the electrodes (the electrodes being connected to the conductive thin film layers) of the actuator element thus obtained, deformation of about 0.05 to about 1 times the length of the element (movable portion on the tip side from the fixed end of each electrode) can be obtained within several seconds. The actuator element can operate flexibly in air or in vacuum.

The theory behind the operation of such an actuator element is that, as shown in Fig. 3, when an electric potential difference is applied across a pair of conductive thin layers 2 that are formed on the surfaces of the electrolyte membrane layer 1 in such a manner as to be insulated from each other, an electric double layer is formed at the interface between the ionic liquid phase and the carbon nanotube phase in the conductive thin layers 2, and each conductive thin layer 2 undergoes expansion or contraction due to the resulting interfacial stress. The reason why the actuator element of the present invention bends toward the positive electrode side as shown in Fig. 3 can be considered to be that there is an effect of causing larger expansion of the carbon nanotube at the negative electrode side due to a quantum chemical effect and also that, in ionic liquids commonly used nowadays, the ionic radius of the cation 4 is large and, due to its steric effect, the negative electrode side undergoes larger expansion. In Fig. 3, 4 indicates a cation of the ionic liquid, and 5 indicates an anion of the ionic liquid.

The actuator element obtained by the above method can have excellent responsiveness, great deformation, and sufficient durability in air or in vacuum. Furthermore, the element has a simple structure and can easily be made smaller and operated at low electric power.

Since the actuator element of the present invention operates with high durability in air or in vacuum and flexibly operates at low voltage, it is suitable as an actuator for use in robots that have contact with people and for which safety is required (for example, actuators for use in personal robots such as home robots, robotic pets, and amusement robots); in robots that work in special conditions such as in outer-space environments, in vacuum chambers, and in rescuing; and in surgical devices, muscle suits, and like medical and welfare robots; in micromachines; and the like.

There is increasing demand for actuators to be used, for example, for transporting specimens and performing positioning, in particular, in fields in which materials are produced in a vacuum environment or an ultra-clean environment to obtain products with high purity. The actuator element of the present invention, which uses an ionic liquid that scarcely evaporates, can be effectively used as a contamination-free actuator in a process performed in a vacuum environment.

It is necessary to form at least two conductive thin film layers on the surface(s) of the electrolyte membrane. For example, as shown in Fig. 4, many conductive thin film layers 2 may be formed on the surfaces of flat electrolyte membrane 1 to cause the actuator element to make complicated movements. Such an actuator element makes it possible to achieve transportation by peristaltic movement, micromanipulators, etc. The shape of the actuator element of the present invention is not limited to a flat shape. The element can easily be produced in any shape. For example, Fig. 4 shows an actuator element comprising four conductive thin film layers 2 formed around an electrolyte membrane 1 in the form of a rod having a diameter of about 1 mm. By using this element, an actuator that can be inserted into a narrow tube can be obtained.

## Examples

The present invention will be described in more detail based on Examples, but is obviously not limited to the Examples.

In the Examples, the displacement of each of the actuator elements was evaluated in the following manner.

Method for Evaluating Displacement of Actuator Element

The elements were cut into strips of 1 mm x 10 mm or 2 mm x 10 mm to obtain samples. The displacement of each sample at a position 5 mm or 4 mm from the fixed end of the electrode to apply voltages was measured using a laser displacement meter, as shown in Fig. 1(A).

The ionic liquid (IL) used in the Examples and the Comparative Example is ethylmethylimidazolium tetrafluoroborate ($EMIBF_4$).

The carbon nanotubes used in the Examples and Comparative Examples are super-growth carbon nanotubes (SG, produced by the National Institute of Advanced Industrial Science and Technology).

The polymer used in the Examples and the Comparative Example is a polyvinylidene fluoride-hexafluoropropylene copolymer (PVDF(HFP); trade name: kynar2801)(V).

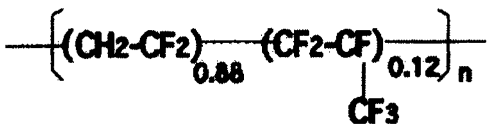

(V)

The solvents used in the Examples and the Comparative Example are N,N'-dimethylacetamide (DMAc), propylene carbonate (PC), and 4-methylpentan-2-one (MP).

The polyaniline (PANI) used in the Examples is available from Aldrich.

The carbon nanohorns (CNH) used in the Examples are Carbon Nanohorn (trade name, produced by NEC Corporation).

The actuator performance index was obtained by multiplying the amount of deformation by generated force.

The force generated by deformation of the actuator element can be directly measured by a load cell (Fig. 1(B)).

Preparation Example 1

Preparation of Dispersion Liquid for Forming Conductive Thin Film Layers

Carbon nanotubes (SG-CNT), polyaniline (PANI), carbon nanohorns (CNH), an ionic liquid (IL), and a polymer (powder PVDF (HFP)) are dispersed in a DMAc solvent and stirred with a magnetic stirrer, followed by ultrasonic dispersion, to prepare a dispersion liquid for forming conductive thin film layers.

The specific amounts used are described in each of the Examples and Comparative Examples.

Preparation of Solution for Forming Electrolyte Membranes

An ionic liquid (IL) and a polymer (powder PVDF (HFP)) are mixed at a weight ratio of 1:1 and dissolved in a solvent by stirring at 70°C in the same manner as described above in Preparation of Dispersion Liquid for Conductive Thin Layers to prepare a solution for forming electrolyte membranes. The solvent used was a mixture of 4-methylpentan-2-one and propylene carbonate.

The specific amounts used are described in each of the Examples and Comparative Examples.

Production of Actuator Elements

A conductive thin film and an electrolyte membrane are obtained by separately casting the dispersion liquid and the solution prepared above into 25 mm x 25 mm casting frames, drying the solvents at room temperature for one day and night, and then drying under vacuum. One sheet of the electrolyte membrane is sandwiched between two sheets of the conductive thin film and then bonded by thermal compression to obtain an actuator element with a three-layer structure. The actuator element has a thickness of about 180 to 550 μm.

Method for Evaluating Actuator Element

The displacement responsiveness of the actuator elements was evaluated using the device shown in Fig. 1 (A). The actuator elements were cut into strips of 1 mm in width x 10 mm in length (Figs. 5 and 7 and Table 1) or strips of 2 mm in width x 10 mm in length (Fig. 6). A portion 3 mm from one end of each sample was clamped with a holder

having electrodes and a voltage is applied in air. The displacement at a position 5 mm (Figs. 5 and 7 and Table 1) or 4 mm (Fig. 6) from the fixed end was measured with a laser displacement meter. The percentage of expansion or contraction (e (%)) was calculated from the length of actuator element (L (mm)), thickness of the element (W (mm)), and displacement (D (mm)) :

$$\varepsilon\ (\%) = 2DW/(L^2+D^2) \times 100$$

The measurement was done while the frequency of voltage was changed in the range of 200 Hz to 0.005 Hz (Figs. 5A to 5D). The long-term DC durability of the actuator elements was evaluated by continuously applying a constant (DC) voltage of +2.0 V (Fig. 7, Table 1). The force generated upon deformation of the actuator element was directly measured by a load cell (Fig. 1B).

Examples 1 to 10 and Comparative Examples 1 and 2

Example 1

(SG-CNT/PANI/CNH) = (50/50/50)

Carbon nanotubes (CNT), polyaniline (PANI), carbon nanohorns (CNH), a polymer (kynar2801), and ionic liquid ($EMIBF_4$) were used in the proportions shown below to prepare a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 50.4 mg/50.0 mg/50.5 mg/80.3 mg/240.2 mg
Electrolyte: kynar2801/$EMIBF_4$ = 200.3 mg/200.3 mg

Example 2

(SG-CNT/PANI/CNH) = (50/50/25)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 50.5 mg/50.3 mg/25.1 mg/80.1 mg/240.5 mg
Electrolyte: kynar2801/$EMIBF_4$ = 200.3 mg/200.3 mg

Example 3

(SG-CNT/PANI/CNH) = (50/25/50)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 50.2 mg/25.0 mg/50.2 mg/80.1 mg/240.3 mg
Electrolyte: kynar2801/$EMIBF_4$ = 200.3 mg/200.3 mg

Example 4

(SG-CNT/PANI/CNH) = (50/25/25)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having

a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 50.0 mg/25.0 mg/25.1 mg/80.5 mg/240.5 mg
Electrolyte: kynar2801/$EMIBF_4$ = 200.3 mg/200.3 mg

Example 5

(SG-CNT/PANI/CNH) = (25/50/50)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 25.2 mg/50.4 mg/50.0 mg/80.3 mg/240.3 mg
Electrolyte: kynar2801/$EMIBF_4$ = 200.3 mg/200.3 mg

Example 6

(SG-CNT/PANI/CNH) = (25/50/25)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 25.1 mg/50.0 mg/25.0 mg/80.5 mg/240.4 mg
Electrolyte: kynar2801/$EMIBF_4$ = 200.3 mg/200.3 mg

Example 7

(SG-CNT/PANI/CNH) = (25/25/50)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 25.1 mg/25.2 mg/50.5 mg/80.2 mg/240.1 mg
Electrolyte: kynar2801/$EMIBF_4$ = 200.3 mg/200.3 mg

Example 8

(SG-CNT/PANI/CNH) = (25/25/25)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 25.4 mg/25.1 mg/25.2 mg/80.4 mg/240.0 mg
Electrolyte: kynar2801/$EMIBF_4$ = 200.3 mg/200.3 mg

Example 9

(SG-CNT/PANI/CNH) = (12.5/50/50)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 12.7 mg/50.4 mg/50.2 mg/80.4 mg/240.1 mg
Electrolyte: kynar2801/$EMIBF_4$ = 200.3 mg/200.3 mg

Example 10

(SG-CNT/PANI/CNH) = (6.25/50/50)

Carbon nanotubes (CNT), polyaniline (PANI), carbon nanohorns (CNH), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements.

Electrode: SG-CNT/PANI/CNH/kynar2801/$EMIBF_4$ = 6.3 mg/50.1 mg/50.1 mg/80.1 mg/240.1 mg
Electrolyte: kynar2801/$EMIBF_4$ = 200.3 mg/200.3 mg

Comparative Example 1

(SG-CNT/PANI/CNH) = (50/50/0)

Carbon nanotubes (CNT), polyaniline (PANI), a polymer (kynar2801), and ionic liquid ($EMIBF_4$) were used in the proportions shown below to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements. Electrode: SG-CNT/PANI/CNH/kynar2801/$EMIBF_4$ = 50.4 mg/50.0 mg/0.0 mg/80.0mg/240.4mg
Electrolyte: kynar2801/$EMIBF_4$ = 200.3 mg/200.3 mg

Comparative Example 2

(SG-CNT/PANI/CNH) = (50/0/50)

Carbon nanotubes (CNT), carbon nanohorns (CNH), a polymer (kynar2801), and ionic liquid ($EMIBF_4$) were used at a SG-CNT/PANI/CNH ratio of 50/0/50 to obtain a conductive thin film. A film-like actuator element having a three-layer structure of a conductive thin film layer (electrode), an electrolyte membrane, and a conductive thin film layer (electrode) was produced in the same manner as described above in Production of Actuator Elements. Electrode: SG-CNT/PANI/CNH/kynar2801/$EMIBF_4$ = 50.4 mg/0.0 mg/50.0 mg/80.3 mg/240.2 mg
Electrolyte: kynar2801/$EMIBF_4$ = 200.3 mg/200.3 mg

Carbon nanotubes (SG-CNT), polyaniline (PANI), carbon nanohorns (CNH), ionic liquid ($EMIBF_4$), and a polymer (PVDF(HFP); kynar2801) were used at the ratios shown below in Table 1 to obtain film-like actuator elements having a three-layer structure of a conductive thin film layer (electrode), an electrolyte membrane, and a conductive thin film layer (electrode). Fig. 7 shows changes in the displacement (the percentage of expansion or contraction) of each actuator during long-term application of a DC (direct current) voltage. The DC voltage durability (deformation deviation from the maximum displacement) was evaluated from Fig. 7 in terms of the ratio of the percentage of expansion or contraction of each actuator element 1800 seconds after voltage application to the maximum expansion or contraction percentage (Table 1). A higher value A in Table 1 indicates better durability.

Value A = (Percentage of expansion or contraction after 1800 seconds / Maximum expansion or contraction percentage) x 100

Table 1: Retention (%) of deformation 1800 seconds after DC voltage application

| A = (Percentage of expansion or contraction after 1800 seconds / Maximum expansion or contraction percentage) x 100<br>A higher value A indicates better durability. | |
|---|---|
| (SG-CNT/PANI/CHN) Composition ratio | Retention (%) A |
| Example 1 (50/50/50) | 78.7 |
| Example 7 (25/25/50) | 65.6 |
| Example 3 (50/25/50) | 59.5 |
| Example 5 (25/50/50) | 35.9 |
| Example 2 (50/50/25) | 31.6 |
| Example 9 (12.5/50/50) | 27.8 |
| Example 4 (50/25/25) | 17.0 |
| Example 10 (6.25/50/50) | 16.4 |
| Comparative Example 1 (50/50/0) | 14.0 |
| Comparative Example 2 (50/0/50) | -13.2 |

Figs. 5 and 6 clearly show the following.

(I) When the amount of CNT is 50 (50 mg), deformation in a lower frequency range is improved by simultaneous addition of PANI and CNH (seen in the circled part of (50/X/X) in Fig. 5B).
(II) When the amount of CNT is 25 (25 mg), actuators whose CNH content is higher than PANI content have larger deformation and greater generated force (seen in Fig. 5A and Fig. 5c and seen from a comparison of Example 6 and 7 in Fig. 6).
(III) When fixed amounts of PANI and CNH are added and the amount of CNT is changed (in case of (X/50/50)), deformation and generated force can both be improved by reducing the amount of CNT (seen in the circled part of Fig. 5D (X/50/50) and seen from a comparison of Examples 5, 9, and 10 in Fig. 6).

Compared with the actuators of Comparative Examples 1 and 2, the actuator of Example 8 (25/25/25) exhibits a higher percentage of expansion or contraction in a frequency range of higher than 0.1 Hz and thus achieves a better result. Further, Fig. 7 and Table 1 clearly show the following.

(i) When the amount of CNH relative to the amount of PANI added is larger, the return phenomenon of displacement (the phenomenon in which displacement decreases from the maximum displacement over time) can be well improved.
(ii) When the amounts of PANI and CNH added are fixed and the amount of CNT is changed (X/50/50), the return phenomenon of displacement can be better improved by increasing the amount of CNT.

Thus, it became possible to improve DC voltage durability of actuator elements by adding PANI and CNH in desired amounts to CNT.

Test Example 1

The responsiveness to the voltage of the actuator elements obtained in Examples 1 to 10 and Comparative Examples 1 to 2 was assessed by the evaluation method of the actuator elements described above. The percentage of expansion or contraction, actuator performance index, and DC voltage durability were investigated. Fig. 5 to Fig. 7 and Table 1 show the results.

Description of the Reference Numerals

1: Electrolyte membrane
2: Conductive thin film layer

3: Conductive layer
4: Cation of ionic liquid
5: Anion of ionic liquid

## Claims

1. A conductive thin film comprising a polymer gel containing a polyaniline (PANI), carbon nanohorns (CNH), carbon nanotubes (CNT), an ionic liquid, and a polymer, wherein the mass of the polyaniline is 10 to 50%, the mass of the carbon nanohorns is 10 to 50%, and the mass of the carbon nanotubes is 1 to 50% when the total mass of the polyaniline, the carbon nanohorns, and the carbon nanotubes is taken as 100%.

2. The conductive thin film according to claim 1, wherein based on the mass ratio,
PANI/CNH = 1/6 to 3/1,
CNT/PANI = 3/50 to 3/1, and
CNT/CNH = 3/50 to 3/1.

3. The conductive thin film according to claim 2, wherein based on the mass ratio,
PANI/CNH = 1/2 to 2/1,
CNT/PANI = 3/25 to 2/1, and
CNT/CNH = 3/25 to 2/1.

4. The conductive thin film according to claim 1, wherein the mass of the carbon nanotubes is 3 to 40% when the total mass of the polyaniline, the carbon nanohorns, and the carbon nanotubes is taken as 100%.

5. A laminate comprising at least one conductive thin film according to any one of claims 1 to 4 and at least one electrolyte membrane comprising an ionic liquid and a polymer.

6. An actuator element comprising the laminate according to claim 5.

7. The actuator element according to claim 6, comprising at least two conductive thin film layers each comprising the conductive thin film according to any one of claims 1 to 4 as an electrode and provided on a surface or surfaces of an electrolyte membrane in such a manner that the conductive thin film layers are insulated from one another, the electrolyte membrane comprising an ionic liquid and a polymer, and the actuator element being deformable by applying a potential difference between the conductive thin film layers.

Fig.1

(A)

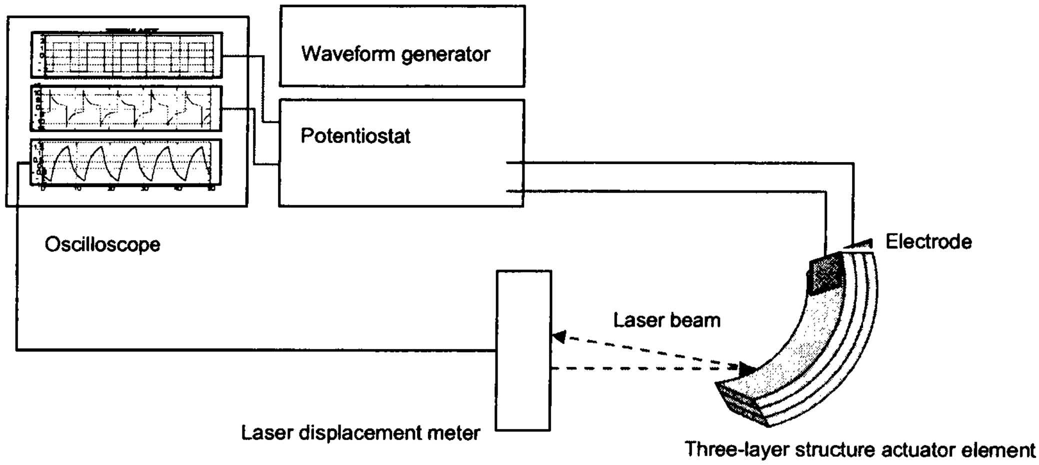
Waveform generator
Potentiostat
Oscilloscope
Electrode
Laser beam
Laser displacement meter
Three-layer structure actuator element

(B)

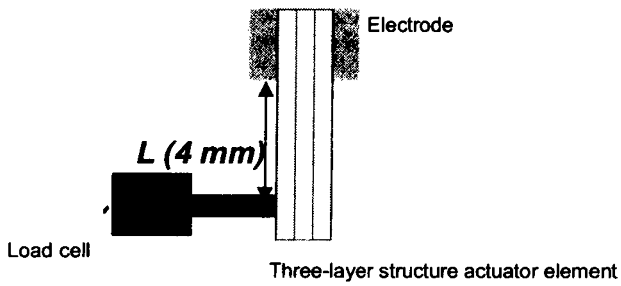
Electrode
L (4 mm)
Load cell
Three-layer structure actuator element

Fig.2

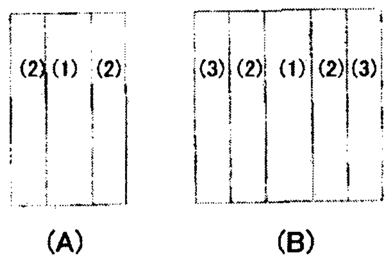


Fig.3

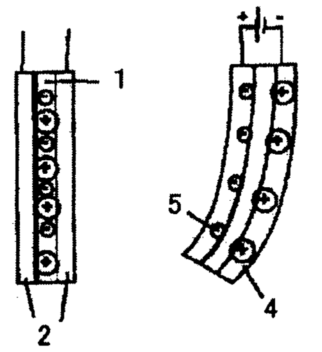


Fig. 4

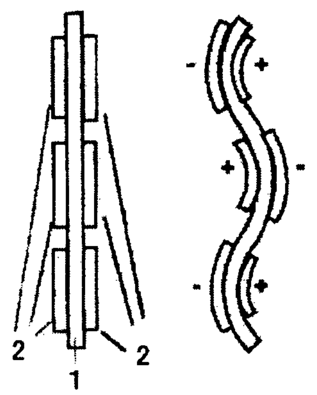

Fig. 5A

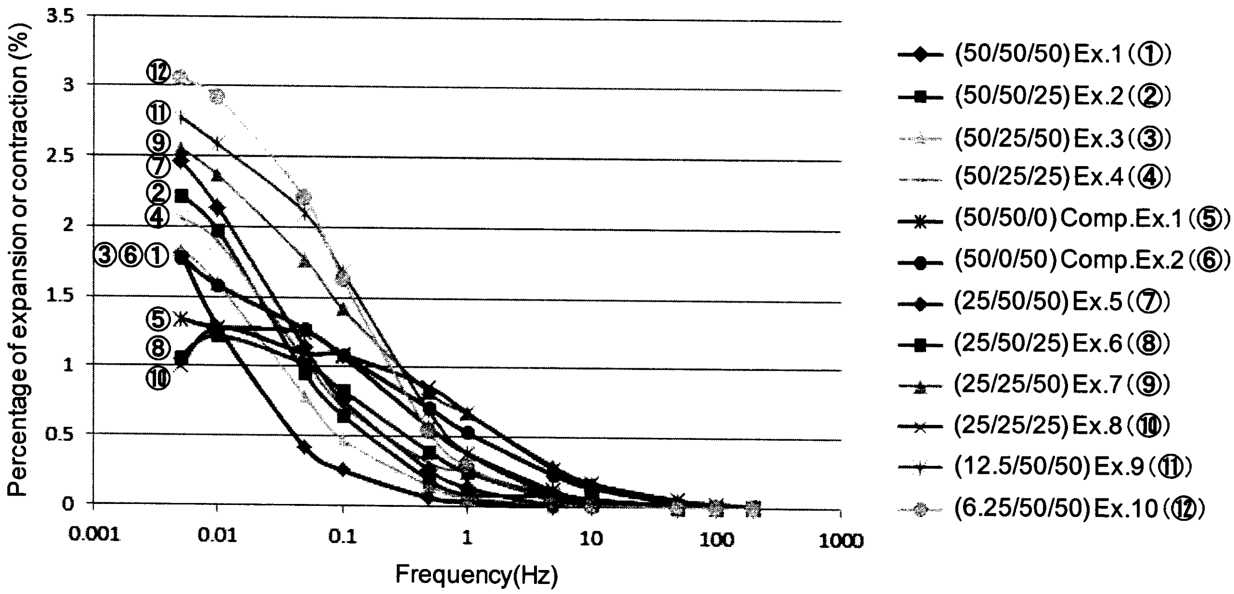

Percentage of expansion or contraction (%)
3.5
3
2.5
2
1.5
1
0.5
0
0.001
0.01
0.1
1
10
100
1000
Frequency(Hz)
⑫
⑪
⑨
⑦
②
④
③⑥①
⑤
⑧
⑩
(50/50/50) Ex.1 (①)
(50/50/25) Ex.2 (②)
(50/25/50) Ex.3 (③)
(50/25/25) Ex.4 (④)
(50/50/0) Comp.Ex.1 (⑤)
(50/0/50) Comp.Ex.2 (⑥)
(25/50/50) Ex.5 (⑦)
(25/50/25) Ex.6 (⑧)
(25/25/50) Ex.7 (⑨)
(25/25/25) Ex.8 (⑩)
(12.5/50/50) Ex.9 (⑪)
(6.25/50/50) Ex.10 (⑫)

Fig. 5B

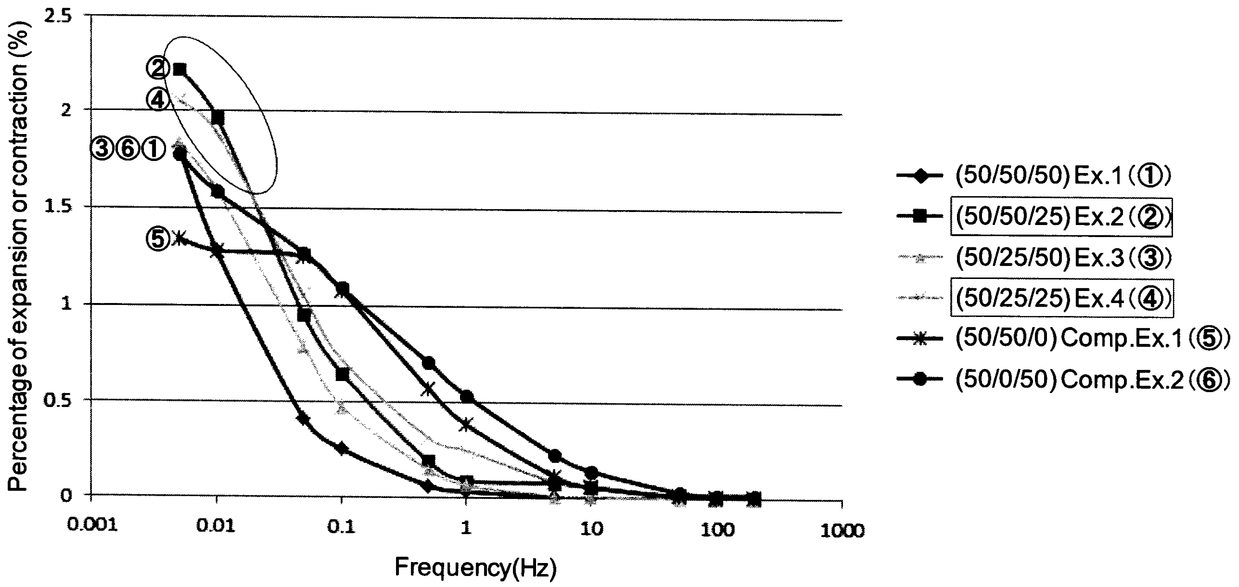
Percentage of expansion or contraction (%)
2.5
2
1.5
1
0.5
0
0.001
0.01
0.1
1
10
100
1000
Frequency(Hz)
②
④
③⑥①
⑤
(50/50/50) Ex.1 (①)
(50/50/25) Ex.2 (②)
(50/25/50) Ex.3 (③)
(50/25/25) Ex.4 (④)
(50/50/0) Comp.Ex.1 (⑤)
(50/0/50) Comp.Ex.2 (⑥)

Fig. 5C

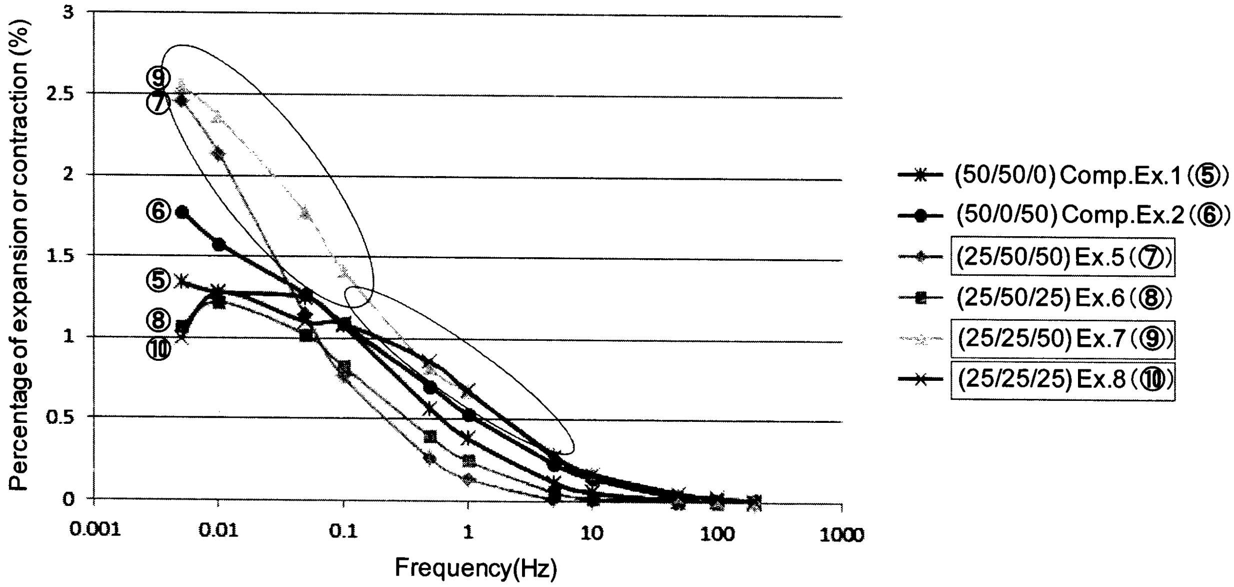
Percentage of expansion or contraction (%)
Frequency(Hz)
0
0.5
1
1.5
2
2.5
3
0.001
0.01
0.1
1
10
100
1000
⑨
⑦
⑥
⑤
⑧
⑩
(50/50/0) Comp.Ex.1 (⑤)
(50/0/50) Comp.Ex.2 (⑥)
(25/50/50) Ex.5 (⑦)
(25/50/25) Ex.6 (⑧)
(25/25/50) Ex.7 (⑨)
(25/25/25) Ex.8 (⑩)

Fig. 5D

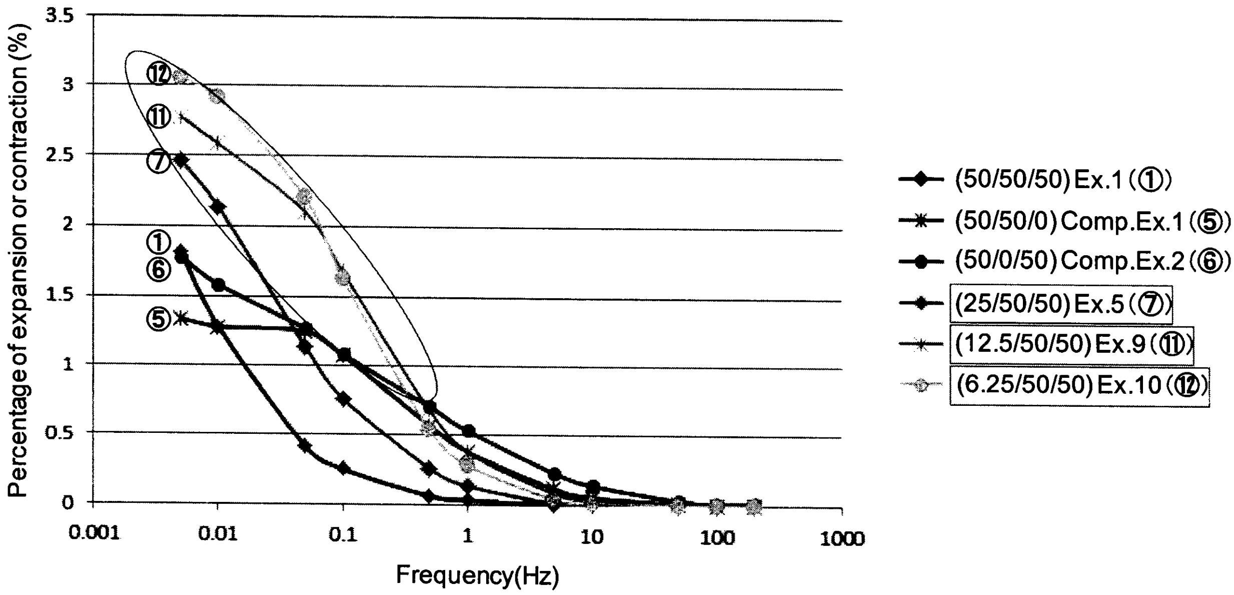
Percentage of expansion or contraction (%)
3.5
3
2.5
2
1.5
1
0.5
0
0.001
0.01
0.1
1
10
100
1000
Frequency(Hz)
⑫
⑪
⑦
①
⑥
⑤
(50/50/50) Ex.1 (①)
(50/50/0) Comp.Ex.1 (⑤)
(50/0/50) Comp.Ex.2 (⑥)
(25/50/50) Ex.5 (⑦)
(12.5/50/50) Ex.9 (⑪)
(6.25/50/50) Ex.10 (⑫)

Fig. 6

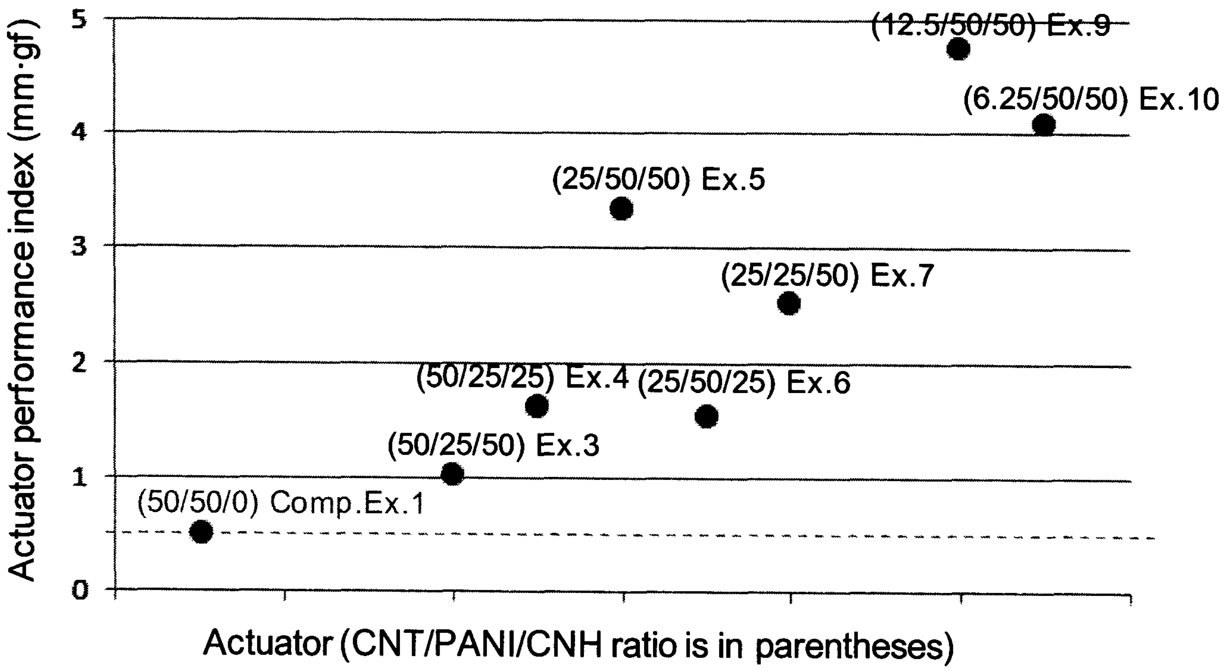
Actuator performance index (mm·gf)
5
4
3
2
1
0
(12.5/50/50) Ex.9
(6.25/50/50) Ex.10
(25/50/50) Ex.5
(25/25/50) Ex.7
(50/25/25) Ex.4
(25/50/25) Ex.6
(50/25/50) Ex.3
(50/50/0) Comp.Ex.1
Actuator (CNT/PANI/CNH ratio is in parentheses)

Fig. 7

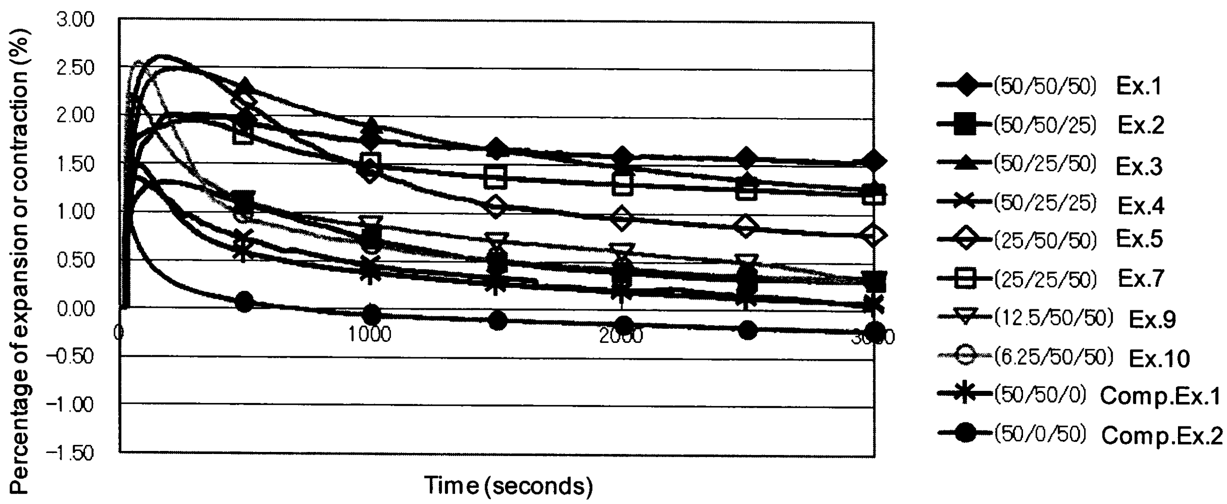
3.00
2.50
2.00
1.50
1.00
0.50
0.00
-0.50
-1.00
-1.50
0
1000
2000
3000
Percentage of expansion or contraction (%)
Time (seconds)
(50/50/50) Ex.1
(50/50/25) Ex.2
(50/25/50) Ex.3
(50/25/25) Ex.4
(25/50/50) Ex.5
(25/25/50) Ex.7
(12.5/50/50) Ex.9
(6.25/50/50) Ex.10
(50/50/0) Comp.Ex.1
(50/0/50) Comp.Ex.2

## INTERNATIONAL SEARCH REPORT

International application No.
PCT/JP2016/074153

A. CLASSIFICATION OF SUBJECT MATTER
*H01B1/24*(2006.01)i, *C08L79/00*(2006.01)i, *C08L101/00*(2006.01)i, *H02N11/00*(2006.01)i

According to International Patent Classification (IPC) or to both national classification and IPC

B. FIELDS SEARCHED

Minimum documentation searched (classification system followed by classification symbols)
H01B1/24, C08L79/00, C08L101/00, H02N11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2014-24954 A (National Institute of Advanced Industrial Science and Technology), 06 February 2014 (06.02.2014), claims; paragraphs [0005] to [0080]; fig. 1 to 5 (Family: none) | 1-7 |
| Y | WO 2010/029992 A1 (Alps Electric Co., Ltd., National Institute of Advanced Industrial Science and Technology), 18 March 2010 (18.03.2010), claims; paragraphs [0004] to [0041] & JP 5252405 B & US 2011/0156538 A1 claims; paragraphs [0007] to [0053] & CN 102150354 A | 1-7 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 October 2016 (04.10.16) | 18 October 2016 (18.10.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/074153

C (Continuation). DOCUMENTS CONSIDERED TO BE RELEVANT

| Category* | Citation of document, with indication, where appropriate, of the relevant passages | Relevant to claim No. |
|---|---|---|
| A | WO 2009/157491 A1 (National Institute of Advanced Industrial Science and Technology), 30 December 2009 (30.12.2009), & JP 5332027 B | 1-7 |
| A | WO 2014/104331 A1 (Alps Electric Co., Ltd., National Institute of Advanced Industrial Science and Technology), 03 July 2014 (03.07.2014), & US 2015/0298963 A1 & EP 2945276 A1 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015163328 A
- WO 2009157491 A
- WO 2010029992 A
- JP 2011239604 A
- JP 2013021765 A